# EUROPÄISCHE PATENTSCHRIFT

(11) **EP 2 815 085 B1**
(45) Veröffentlichungstag und Bekanntmachung des Hinweises auf die Patenterteilung: **18.01.2017**
(21) Anmeldenummer: 13709885.1
(22) Anmeldetag: 13.03.2013
(51) Int. Cl.: F01K 13/02, F22B 1/00

(54) **LEISTUNGSREGELUNG UND/ODER FREQUENZREGELUNG BEI EINEM SOLARTHERMISCHEN DAMPFKRAFTWERK**
POWER REGULATION AND/OR FREQUENCY REGULATION IN A SOLAR THERMAL STEAM POWER PLANT
RÉGULATION DE PUISSANCE ET/OU RÉGULATION DE FRÉQUENCE POUR UNE CENTRALE HÉLIOTHERMIQUE À VAPEUR

(30) Priorität: 16.03.2012 DE 102012204218
(43) Veröffentlichungstag der Anmeldung: 24.12.2014
(73) Patentinhaber: Siemens Aktiengesellschaft, 80333 München (DE)
(72) Erfinder: BUGGERT, Matthias, 91054 Erlangen (DE); WIESENMÜLLER, Wolfgang, 90762 Fürth (DE)
(86) Internationale Anmeldenummer: PCT/EP2013/055118
(87) Internationale Veröffentlichungsnummer: WO 2013/135760

(56) Entgegenhaltungen:
- EP-A1- 0 535 382
- EP-A1- 2 224 104
- WO-A2-2006/097495
- DE-A1- 19 510 343
- DE-A1-102008 062 588

## Beschreibung

Die Erfindung betrifft ein Verfahren zur Sollwertanpassung eines Sollwerts, insbesondere für eine automatische Leistungsregelung und/oder Frequenz Frequenz- bzw. Primär- und/oder eine Sekundärregelung, bei einem solarthermischen Dampfkraftwerk mit einer nicht anpassbaren primären Wärmequelle und einer zusätzlichen Wärmequelle sowie ein solarthermisches Dampfkraftwerk.

Dampfkraftwerke in ihrer allgemeinen Form sind weithin bekannt, beispielsweise aus http://de.wikipedia.org/wiki/Dampfkraftwerk (erhältlich am 14.03.2012).

Ein Dampfkraftwerk ist eine Bauart eines Kraftwerks zur Stromerzeugung, bei der eine thermische Energie von Wasserdampf in einer Dampfturbine in Bewegungsenergie umgesetzt und weiter in einem Generator in elektrische Energie umgewandelt wird.

Bei einem solchen Dampfkraftwerk wird der zum Betrieb der Dampfturbine notwendige Wasserdampf zunächst in einem Dampfkessel aus in der Regel zuvor gereinigtem und aufbereitetem (Speise-)Wasser erzeugt. Durch weiteres Erwärmen des Dampfes in einem Überhitzer nehmen Temperatur und spezifisches Volumen des Dampfes zu.

Vom Dampfkessel aus strömt der Dampf über Rohrleitungen in die Dampfturbine, wo er einen Teil seiner zuvor aufgenommenen Energie als Bewegungsenergie an die Turbine abgibt. An die Turbine ist ein Generator angekoppelt, der mechanische Leistung in elektrische Leistung umwandelt.

Danach strömt der entspannte und abgekühlte Dampf in den Kondensator, wo er durch Wärmeübertragung an die Umgebung kondensiert und sich als flüssiges Wasser sammelt.

Über Kondensatpumpen und Vorwärmer hindurch wird das Wasser in einen Speisewasserbehälter zwischengespeichert und dann über eine Speisepumpe und Vorwärmer hindurch erneut dem Dampfkessel zugeführt, womit ein Kreislauf geschlossen wird.

Man unterscheidet verschiedene Dampfkraftwerksarten, wie beispielsweise Kohlekraftwerke, Ölkraftwerke, Gas- und-Dampf-Kombikraftwerke (GuD-Kraftwerke) sowie auch solarthermische Dampfkraftwerke (kurz im Folgenden solarthermische Kraftwerke).

Solarthermische Kraftwerke sind ebenfalls bekannt, beispielsweise aus http://de.wikipedia.org/wiki/Sonnenwärmekraftwerk (erhältlich am 14.03.2012).

Ein solarthermisches Kraftwerk ist dabei eine spezielle Form eines Dampfkraftwerkes, bei welchem Solarenergie als primäre Energiequelle bzw. Wärmequelle zur Dampferzeugung verwendet wird.

Dazu weist ein solches solarthermisches Kraftwerk zwei - über einen Wärmetauscher (thermisch) gekoppelte - Kreisläufe, einen Primär- (solarer Kreislauf) und einen Sekundarkreislauf (Wasser-Dampf-Kreislauf) auf, d.h. es arbeitet nach einem Zweikreisprinzip.

In dem Primärkreislauf bzw. solaren Kreislauf wird ein - zumeist eine Vielzahl von Solarkollektoren, angeordnet in einem Solarkollektorenfeld, durchströmendes - Wärmeträgermedium, beispielsweise (Thermo-)Öl dort durch Sonneneinstrahlung erwärmt (primäre Wärme-/Energiequelle bzw. primäre Energie-/Wärmezufuhr).

Das erwärmte Wärmeträgermedium durchströmt weiter den Wärmetauscher, in dem es die aufgenommene thermische Energie an den Sekundärkreislauf, den Wasser-Dampf-Kreislauf, bzw. an das dortige Prozessmedium, d.h. an ein (Speise-)Wasser, überträgt.

Danach strömt das - jetzt abgekühlte - Wärmeträgermedium zurück zu den Solarkollektoren, wodurch der primäre Kreislauf bzw. der solare Kreislauf geschlossen wird.

Durch den Wärmeübertrag vom Primärkreislauf an den Sekundärkreislauf bzw. an den Wasser-Dampf-Kreislauf wird dort das (Speise-)Wasser in Wasserdampf umgewandelt, d.h. es wird aufgewärmt, verdampft und überhitzt, und strömt über Rohrleitungen zur Dampfturbine, in der der Wasserdampf einen Teil seiner Energie durch Entspannung als Bewegungsenergie an die Turbine abgibt.

Durch den an die Turbine gekoppelten Generator wird die mechanische Leistung dann in elektrische Leistung umwandelt, welche als elektrischer Strom in ein Stromnetz eingespeist wird.

In der Regel unterhalb der Turbine ist der Kondensator angeordnet, in dem der Dampf - nach Entspannung in der Turbine - den größten Teil seiner Wärme an das Kühlwasser überträgt. Während dieses Vorganges verflüssigt sich der Dampf durch Kondensation.

Die Speisewasserpumpe fördert das entstandene flüssige Wasser als Speisewasser erneut zu dem Wärmetauscher, womit auch der sekundäre Kreislauf geschlossen ist.

Sämtliche, in einem solarthermischen Dampfkraftwerk anfallenden Informationen, wie beispielsweise Messwerte, Prozess-oder Zustandsdaten, werden in einer Leitwarte angezeigt und dort, meist in einer zentralen Recheneinheit, ausgewertet, wobei Betriebszustände einzelner Kraftwerkskomponenten angezeigt, ausgewertet, kontrolliert, gesteuert und/oder geregelt werden.

Über Steuerorgane kann ein Kraftwerkspersonal in einen Betriebsablauf des Kraftwerks eingreifen, beispielsweise durch Öffnen oder Schließen einer Armatur oder eines Ventils oder auch durch eine Veränderung einer zugeführten Brennstoffmenge.

Zentraler Bestandteil einer solchen Leitwarte ist ein Leitrechner, auf welchem eine Blockführung, eine zentrale Kontroll- bzw. Steuer- und/oder Regeleinheit, - beispielsweise als ein Automatisierungssystem/Automatisierungssoftware - implementiert ist, mittels welcher eine Kontrolle, eine Steuerung und/oder eine Regelung des solarthermischen Kraftwerks durchgeführt werden kann.

In einem deregulierten Strommarkt gewinnen ein flexibler Lastbetrieb von Kraftwerken und Einrichtungen zur Frequenzregelung in Stromnetzen für den Kraftwerksbetrieb immer mehr an Bedeutung.

Hinsichtlich der Frequenzregelung in Stromnetzen unterscheidet man verschiedene Arten der Frequenzregelung, beispielsweise eine Primärregelung und eine Sekundärregelung mit oder ohne sogenanntem Totband.

Da elektrische Energie auf dem Weg vom Erzeuger zum Verbraucher nicht gespeichert werden kann, muss Stromerzeugung und Stromverbrauch in jedem Augenblick im Stromnetz im Gleichgewicht stehen, d.h. es muss genau so viel elektrische Energie erzeugt werden, wie verbraucht wird. Die Frequenz der elektrischen Energie ist dabei die integrierende Regelgröße und nimmt den Netzfrequenznennwert an, solange sich Stromerzeugung und Stromverbrauch im Gleichgewicht befinden. Die Drehzahlen der an einem Stromnetz angeschlossenen Kraftwerksgeneratoren sind mit dieser Netzfrequenz synchronisiert.

Kommt es zu einem bestimmten Zeitpunkt zu einem Erzeugungsdefizit im Stromnetz, so wird dieses Defizit zunächst durch eine in Schwungmassen von rotierenden Maschinen (Turbinen, Generatoren) enthaltene Energie gedeckt. Die Maschinen werden dadurch abgebremst, wodurch deren Drehzahl und damit die (Netz-)Frequenz weiter sinken.

Wird diesem Absinken der Netzfrequenz nicht durch geeignete Leistungs- bzw. Frequenzregelung im Stromnetz entgegengewirkt, würde dies zum Netzzusammenbruch führen.

Innerhalb des sogenannten Totbandes im Bereich kleiner Frequenzabweichungen von bis zu +/- 0,07-0,1 Hz erfolgen im Normalfall keinerlei Regeleingriffe. Möglich ist in diesem Bereich lediglich eine verzögerte langsame Gegensteuerung zur Kompensation bleibender Abweichungen zwischen Erzeugung und Verbrauch.

Größere Frequenzabweichungen im Bereich von 0,1-3,0 Hz, beispielsweise hervorgerufen durch Kraftwerksausfälle und Schwankungen im Stromverbrauch, werden durch die Primärregelung auf die an der Primärregelung beteiligten Kraftwerke im gesamten Stromnetz aufgeteilt. Diese stellen dafür eine so genannte Primärregelreserve, also eine Leistungsreserve, zur Verfügung, welche von den beteiligten Kraftwerken automatisch an das Stromnetz abgegeben wird, um dadurch das Ungleichgewicht zwischen Erzeugung und Verbrauch innerhalb von Sekunden durch Regelung der Erzeugung auszugleichen.

Die Primärregelung dient damit der Stabilisierung der Netzfrequenz bei möglichst kleiner Abweichung, jedoch auf einem von einem vorgegebenen Netzfrequenznennwert abweichenden Niveau.

Die sich an die Primärregelung anschließende Sekundärregelung hat die Aufgabe, das Gleichgewicht zwischen den Stromerzeugern und -verbrauchern im Stromnetz wieder herzustellen und dadurch die Netzfrequenz wieder auf den vorgegebenen Netzfrequenznennwert, z. B. 50 Hz, zurückzuführen.

Die an der Sekundärregelung beteiligten Kraftwerke stellen hierzu eine Sekundärregelreserve zur Verfügung, um die Netzfrequenz wieder auf den Netzfrequenznennwert zurückzuführen und das Gleichgewicht im Stromnetz wieder herzustellen.

Die Anforderung der Primärregelreserve und die Abgabe der Primärregelreserve in das Stromnetz erfolgt automatisch durch die Regeleinrichtungen der an der Primärregelung beteiligten Kraftwerke erfolgt (das Stromnetz als solches bzw. die Frequenzänderung im Stromnetz (er-)fordert die Primärregelreserve), wohingegen die Sekundärregelung durch einen übergeordneten Netzregler im Stromnetz bei den an der Sekundärregelung beteiligten Kraftwerken angefordert - und dann auf diese Anforderung von den Kraftwerken in das Stromnetz abgegeben wird.

Zum Teil ist die Bereitstellung von Frequenz- bzw. Primär- und/oder Sekundärregelreserve für die Kraftwerke in - durch nationale Vorschriften - bestimmtem Umfang verpflichtend; von den Kraftwerken zur Verfügung gestellte Regelreserven werden den Kraftwerken in der Regel als spezielle Netzdienstleistungen vergütet.

Somit kann auch für solarthermische Dampfkraftwerke eine Teilnahme an der Frequenzregelung oder einem Leistungsregelbetrieb wirtschaftlich attraktiv sein. Auch wird mit einem Ausbau von regenerativen Energien (z.B. Windenergie) eine Verschärfung von Anforderungen an eine Regelfähigkeit unterschiedlicher Kraftwerksarten erwartet. So ist zu erwarten, dass die Anforderung zur Frequenzregelung zukünftig auch für solarthermische Kraftwerke festgeschrieben werden wird.

Der Betrieb eines solarthermischen Kraftwerks weist allerdings den Nachteil auf, dass dieser aufgrund der nicht frei anpassbaren primären Wärmequelle und aufgrund einer Trägheit des solarthermischen Prozesses nicht leistungs- und/oder frequenzregelungsfähig ist.

Dabei sei unter der nicht frei anpassbaren primären Wärmequelle zu verstehen, dass diese primäre Wärmequelle Bedingungen unterliegt, welche außerhalb einer kraftwerksseitigen Beeinflussung liegen, - und sie damit - aus Sicht des Kraftwerks - nicht frei anpassbar ist. So unterliegt beispielsweise die Sonneneinstrahlung bzw. deren primäre Wärmezufuhr auf das Wärmeträgermedium mehr oder weniger zufälligen, nicht vorhersehbaren Änderungen, wie beispielsweise durch sich ändernde Sonneneinstrahlung bzw. Bewölkung, wodurch eine solche Wärmquelle kraftwerksseitig nicht frei anpassbar ist.

Auch eine in der Regel großflächige Ausdehnung des Solarkollektorenfeldes führt zu zeitlich stark verzögerten Änderungen im Solarkollektorenfeld. Damit kann durch eine Änderung einer Fokussierung der Solarkollektoren keine zielgenaue Änderung der Generatorleistung bewirkt werden, was ebenfalls die Leistungs- und/oder Frequenzregelungsfähigkeit bei einem solarthermischen Kraftwerk stark einschränkt.

Eine Leistungsregelung und/oder Frequenz- bzw. eine Primär- und/oder Sekundärregelung, bzw. die Bereitstellung einer Frequenz- bzw. Primär- und/oder Sekundärregelreserve - wie erwünscht bzw. wie gefordert - ist bei solchen solarthermischen Kraftwerken nicht möglich.

Um dennoch eine gewisse Leistungsanpassung bei solarthermischen Kraftwerken zu ermöglichen, kann eine - zu der primären Wärmequelle (im solaren Kreislauf) - zusätzliche Wärmequelle, beispielsweise eine zusätzliche Erdgasbefeuerung mittels spezieller Erdgaskessel, im Primärkreislauf vorgesehen werden.

Diese zusätzliche Wärmequelle bzw. im speziellen ein solche zusätzliche Erdgasbefeuerung, insbesondere angeordnet im solaren Kreislauf direkt vor dem Wärmeübertrager bzw. Wärmetauscher, ermöglicht je nach Bedarf die Temperatur des Wärmeträgermediums im primären Kreislauf anzupassen, wodurch entsprechen mehr oder weniger elektrische Leistung im sekundären Kreislauf erzeugt werden kann.

Wird hier durch die zusätzlichen Wärmequelle, beispielsweise der Erdgasbefeuerung, je nach Bedarf Wärme zugeführt bzw. reduziert, so kann die abgegebene elektrische Kraftwerksleistung bei einem solchen solarthermischen Kraftwerk mit nicht frei anpassbarer primärer Wärmequelle/-zufuhr und mit einer zusätzlichen Wärmequelle/Wärmezufuhr verstetigt bzw. in gewissem Umfang elektrische Leistungsrampen, sowie eine Frequenz- bzw. Primär- und/oder eine Sekundärregelung gefahren werden.

Begrenzt wird - auch hier, d.h. bei einem solchen solarthermischen Kraftwerk mit - nicht frei anpassbarer - primärer Wärmequelle und zusätzlicher Wärmequelle, wie auch bei solarthermischen Kraftwerken im Allgemeinen - die erreichbare Leistung lediglich durch eine ermittelte Kann-Leistung, d.h. eine maximal fahrbare Leistung des Kraftwerks in Abhängigkeit vom Zustand einzelner leistungsbegrenzender Aggregate (z.B. Speisepumpen in Betrieb).

Darüber hinaus kann die zusätzliche Wärmequelle im Primärkreislauf auch dazu genutzt werden, um das Wärmeträgermedium flüssig zu halten ("Anti-Freeze-Schutz").

Ein Maß des Einsatzes dieser zusätzlichen Wärmequelle, wie beispielsweise der zusätzlichen Erdgasbefeuerung, beruht aber einzig und alleine auf wirtschaftlichen Überlegungen, erfordert doch eine solche zusätzliche Befeuerung bzw. Wärmezufuhr zusätzliche/erhöhte Brennstoff- und/oder Kraftwerkskosten.

Wenn auch durch eine solche zusätzliche Wärmezufuhr eine gewisse Leistungsanpassung bei diesen solarthermischen Kraftwerken dem Grundsatz nach möglich wird, so bleibt der Nachteil, dass weiter nicht vorhersehbar ist, in welchem Bereich bzw. Umfang die Leistungsanpassung möglich ist bzw. eine Leistungsregelung dadurch möglich ist, da die Schwankungen bei der - nicht anpassbaren - primären Wärmequelle, d.h. der Sonnenenergie, nicht vom Kraftwerk beeinflussbar sind und mehr oder weniger zufällig auftreten.

Damit ist aber auch ein solches solarthermisches Kraftwerk - mit nicht frei anpassbarer primärer Wärmequelle und zusätzlicher Wärmequelle aufgrund der zufälligen auftretenden Schwankungen bei der primären Wärmezufuhr nicht leistungs- und/ oder frequenz- bzw. primär- und/oder sekundärregelfähig, was - als mindest negative Auswirkung - entsprechende Einnahmeausfälle für den Betreiber des Kraftwerks nach sich zieht.

Zur Beschleunigung von Leistungsänderungen im Rahmen der Frequenzregelung bzw. Sekundär- und/oder Primärregelung bei Dampfkraftwerken ist es bekannt ("Flexible Load Operation and Frequency Support for Steam Turbine Power Plants", Wichtmann et al., VGB PowerTech 7/2007, Seiten 49 - 55), schnell wirkende Zusatzmaßnahmen einzusetzen, welche auf die Nutzung von im Prozessmedium des Dampfkraftwerks, d.h. im Speisewasser bzw. Wasserdampf, enthaltener Energie beruhen ("thermischer Speicher im Wasser-Dampf-Kreislauf").

Bekannte Beispiele hierfür sind eine Drosselung von einem Hochdruck-Turbinenregelventil, eine Überlasteinleitung zur Hochdruckteilturbine, ein Kondensatstau, eine speisewasserseitige Umgehung von Hochdruckvorwärmern sowie eine Androsselung der Anzapfdampfleitungen zu den Hochdruckvorwärmern.

Diese Prozessmedium-immanenten Energiespeicher bzw. diese thermischen Speicher im Wasser-Dampf-Kreislauf sind allerdings begrenzt, sodass auch die dadurch zur Verfügung stellbare Regelreserve begrenzt ist.

Auch besteht die Notwendigkeit, einen solchen thermischen Speicher im Wasser-Dampf-Kreislauf wieder aufzufüllen, wenn der Energiespeicher bzw. thermische Speicher im Wasser-Dampf-Kreislauf einmal verbraucht/entleert ist, was die Regelreserven weiter einschränkt.

Das Dokument DE 195 10 343 A1 offenbart ein Verfahren zur Kraftwerks optimierung nach dem Stand der Technik.

Der Erfindung liegt die Aufgabe zugrunde, ein Verfahren zu schaffen, welches eine, insbesondere automatische bzw. automatisierte, Leistungsregelung und/oder Frequenz- bzw. Primär- und/oder Sekundärregelung bei einem solarthermischen Kraftwerk mit einer nicht anpassbaren primären Wärmequelle und einer zusätzlichen Wärmequelle ermöglicht. Auch liegt der Erfindung die Aufgabe zugrunde, ein für eine, insbesondere automatische bzw. automatisierte, Leistungsregelung und/oder Frequenz- bzw. Primär- und/oder Sekundärregelung geeignetes solarthermisches Kraftwerk zu schaffen.

Die Aufgabe wird durch das Verfahren zur Sollwertanpassung eines Sollwerts, insbesondere für eine automatische Leistungsregelung und /oder Frequenzregelung, bei einem solarthermischen Dampfkraftwerk mit einer nicht anpassbaren primären Wärmequelle und einer zusätzlicher Wärmequelle wie auch durch das solarthermische Kraftwerk mit den Merkmalen gemäß dem jeweiligen unabhängigen Patentanspruch gelöst.

Bevorzugte Weiterbildungen der Erfindung ergeben sich auch aus den abhängigen Ansprüchen. Die Weiterbildungen beziehen sich sowohl auf das erfindungsgemäße Verfahren als auch auf das erfindungsgemäße solarthermische Kraftwerk. Das erfindungsgemäße solarthermische Kraftwerk ist insbesondere geeignet zur Durchführung des erfindungsgemäßen Verfahrens oder einer deren nachfolgend erläuterten Weiterbildungen.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder eine Weiterbildung ausführt.

Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

Die Erfindung bezieht sich auf ein solarthermisches Kraftwerk mit einem primären sowie mit einem mit dem primären, insbesondere über einen Wärmeübertrager (thermisch) gekoppelten, sekundären Kreislauf.

In dem primären Kreislauf ist eine - zu einer nicht anpassbaren primären Wärmequelle für eine primäre Wärmezufuhr - zusätzliche Wärmequelle zu einer (zusätzlichen) Erhöhung oder Verringerung der Wärmezufuhr eines in dem primären Kreislauf zirkulierenden Wärmeträgermediums, beispielsweise eines (Thermo-)Öls, vorgesehen.

Erfindungsgemäß ist nach dem Verfahren zur Sollwertanpassung eines Sollwerts vorgesehen, dass für zumindest einen vorgege-benen Zeitpunkt während eines Betriebs des solarthermischen Kraftwerks ein aktueller Leistungsregelbereich und/oder Frequenzregelbereich, d.h. ein aktueller Leistungsbereich ((Leistungs-(Fenster), für das solarthermische Kraftwerk ermittelt wird.

Dieser aktuelle Leistungsbereich bzw. der aktuelle Leistungsregelbereich und/oder Frequenzregelbereich des solarthermischen Dampfkraftwerks wird durch eine untere Regelbereichsgrenze und durch eine obere Regelbereichsgrenze begrenzt.

Ferner wird der aktuelle Leistungsbereich unter Verwendung einer aktuellen Leistung aus der aktuellen primären Wärmezufuhr durch die primäre Wärmequelle sowie unter Verwendung eines Leistungsbereichs aus der zusätzlichen Wärmequelle bestimmt.

Anders ausgedrückt, der aktuelle Leistungsbereich ergibt sich aus der aktuellen Leistung aus der aktuellen primären Wärmezufuhr durch die primäre Wärmequelle sowie bzw. zuzüglich dem Leistungsbereich der zusätzlichen Wärmequelle - oder mehrerer zusätzlichen Wärmequellen.

Bei der unteren Regelbereichsgrenze wird eine untere Leistungsreserve mit zumindest einem Reserveanteil für eine Leistungsregelung und/oder Frequenz- bzw. Primär- und/oder Sekundärfrequenzregelung berücksichtigt. Bei der oberen Regelbereichsgrenze wird eine obere Leistungsreserve ebenfalls mit zumindest einem Reserveanteil für die Leistungsregelung und/oder Frequenz- bzw. Primär- und/oder Sekundärfrequenzregelung berücksichtigt.

Bei der Sollwertanpassung wird dann ein aktueller, beispielsweise von einem Lastverteiler vorgegebener, Sollwert des solarthermischen Kraftwerks, falls der aktuell vorgegebene Sollwert außerhalb des aktuellen Leistungsbereichs liegt, in dem aktuellen Leistungsbereich eingestellt.

Dabei sollen die Grenzen des aktuellen Leistungsbereichs auch zum aktuellen Leistungsbereich gehören.

Anders bzw. vereinfacht ausgedrückt, es wird gemäß der Erfindung zu einem Betriebszeitpunkt dieses solarthermischen Kraftwerks mit einer nicht frei anpassbaren primären Wärmequelle und einer zusätzlichen Wärmequelle ein aktueller Leistungsbereich ((Leistungs-)Fenster) für das Kraftwerk ermittelt.

Dieser aktuelle Leistungsbereich wird bestimmt durch die Leistung, welche durch die primäre Wärmequelle/-zufuhr, d.h. durch Sonnenenergie, erzielbar ist, sowie - wodurch der Leistungsbereich als Fenster aufgespannt wird - durch einerseits die Leistung, welche durch die minimal mögliche zusätzliche Wärmezufuhr erzielbar ist (minimale Zusatzwärmezufuhr bzw. - feuerung) und andererseits die Leistung, welche durch die maximal mögliche zusätzliche Wärmezufuhr erzielbar ist (maximale Zusatzwärmezufuhr bzw. -feuerung).

Mit dieser minimal und maximal möglichen zusätzlichen Wärmezufuhr sollen maximal mögliche - nach unten und nach oben - technische Randbedingungen der zusätzlichen Wärmequelle berücksichtigt werden.

Die minimale zusätzliche Wärmezufuhr kann sich daraus ergeben, dass eine bestimmte (Mindest-)Menge an zusätzlicher Wärmezufuhr notwendig ist, um die zusätzliche Wärmequelle stabil zu betreiben. Entsprechend kann sich eine maximale zusätzliche Wärmezufuhr daraus ergeben, dass ein stabiler Betrieb der zusätzlichen Wärmequelle "nach oben" begrenzt ist.

Darüber hinaus ist es zweckmäßig, eine derartige zusätzliche Wärmequelle vorzusehen, welche einen schnellen Wärmeeintrag auf das Wärmeträgermedium ermöglicht, beispielsweise eine Erdgasbefeuerung, und/oder welche - innerhalb großer Bereiche - regelbar ist. Insbesondere mehrere kleinere zusätzliche Wärmequellen ("kleine Stückelung") - anstelle einer großen zusätzlichen Wärmequelle kann hier sinnvoll sein.

Beispielsweise kann die zusätzliche Wärmezufuhr für das Wärmeträgermedium bzw. auf das Wärmeträgermedium eine Erdgasfeuerung mit einem entsprechenden speziellen Erdgasbrenner bzw. Erdgaskessel - oder bei kleinerer Stückelung - mit mehreren Erdgasbrennern bzw. Erdgaskesseln sein bzw. mittels solcher erfolgen. Andere Zusatzfeuerungen, wie zum Beispiel eine Kohle- oder Ölfeuerung, sind auch möglich.

An den Grenzen dieses aktuellen Leistungsbereichs aus aktueller primärer Wärmezufuhr und zusätzlicher Wärmezufuhr (minimale und maximale Zusatzwärmezufuhr) wird jeweils eine Leistungsreserve mit mindestens einem Leistungsreserveanteil für die Leistungsregelung und/oder Frequenz- bzw. Primär- und/oder Sekundärfrequenzregelung "eingebaut" bzw. berücksichtigt.

D.h., die Grenzen dieses aktuellen Leistungsbereichs werden jeweils um diese einzubauende bzw. zu berücksichtigende Leistungsreserve zusammengeschoben, wodurch sich der aktuelle Leistungsbereich um diese beiden Leistungsreserven an oberer Grenze und unterer Grenze verringert - und wodurch für diesen aktuellen Leistungsbereich ein Reserveanteil für eine Leistungsregelung und/oder Frequenz- bzw. Primär- und/oder Sekundärfrequenzregelung zur Verfügung steht bzw. gewährleistet ist.

Die Grenzen des aktuellen Leistungsbereichs sollen dabei zum Bereich gehörig betrachtet werden.

Diese Grenzen können dann als Begrenzungen bzw. dieser aktuelle Leistungsbereich/(Leistungs-)Fenster kann dann als Begrenzung auf einen Sollwertsteller dieses solarthermischen Kraftwerks geschaltet werden, welcher den aktuell vorgegebenen Sollwert, falls dieser außerhalb des aktuellen Leistungsfensters liegt, diesen innerhalb des aktuellen Leistungsfensters einstellt bzw. in das aktuelle Leistungsfenster führt (Sollwertanpassung).

Anschaulich gesehen kann hier der aktuelle und anzupassende Sollwert zumindest bis an/auf die entsprechend relevante obere oder untere Fenstergrenze geschoben werden.

Eine weitergehende Verschiebung des Sollwertes innerhalb des aktuellen Leistungsfensters ist möglich, beispielsweise bis in die Mitte des Leistungsfensters, allerdings erscheint es zweckmäßig, den Sollwert "nur" bis an die Leistungsfenstergrenze heranzufahren, um dadurch unnötig große Leistungsschwankungen der Anlage zu vermeiden.

Liegt der vorgegebene oder angepasste Sollwert dieses solarthermischen Kraftwerks dann innerhalb dieses Leistungsfensters, ist eine Leistungsregelung, wie eine elektrische Leistungsrampe, die Sekundär- oder die Primärregelung, dieses solarthermischen Kraftwerks immer möglich bzw. gewährleistet.

Unabhängig davon wird die erreichbare Leistung dieses solarthermischen Kraftwerks lediglich begrenzt durch eine ermittelte Kann-Leistung, d.h. eine maximal fahrbare Leistung des solarthermischen Kraftwerks in Abhängigkeit vom Zustand einzelner leistungsbegrenzender Aggregate (z.B. Speisepumpen in Betrieb).

Das aktuelle Leistungsfenster und/oder dessen Grenzen können - zur Information - auch an den Lastverteiler übermittelt werden.

Wird die Erfindung bzw. das erfindungsgemäße Verfahren über einen Zeitverlauf, d.h. zu aufeinanderfolgenden Zeitpunkten, eines Zeitintervalls, beispielsweise einer Betriebsphase oder einer Betriebsdauer dieses Dampfkraftwerks/solarthermischen Kraftwerks, durchgeführt, so verschiebt sich mit Änderung der jeweils aktuell zur Verfügung stehenden primären Wärmemenge, insbesondere der Sonneneinstrahlung, (über die Zeit) das Leistungsfenster, innerhalb dessen der Sollwert - für die Gewährleistung der Leistungsregelung und/oder Frequenz- bzw. Primär- und/oder Sekundärfrequenzregelung bei diesem Dampfkraftwerk - liegen darf, lediglich automatisch nach oben bzw. unten.

Damit verbunden ist eine automatische Anpassung des möglichen Einstellbereiches des Sollwertstellers.

Ein aktueller Sollwert, der infolge einer Verringerung der primären Wärmemenge, insbesondere bei zum Beispiel Eintritt von Bewölkung, und/oder Zusatzwärmemengenkapazität nun plötzlich oberhalb der oberen Grenze des Leistungsfensters liegen würde, wird entsprechend vom Sollwertsteller angepasst, d.h. er wird von der sinkenden oberen Begrenzung automatisch mit nach unten geführt.

Sobald sich, aufgrund einer Änderung bzw. Erhöhung der primären Wärmemenge, insbesondere beispielsweise unbewölkte Sonneneinstrahlung, und/oder Zusatzwärmemengenkapazität, die obere Begrenzung wieder nach oben verschiebt und dadurch der zuvor mit der oberen Leistungsfenstergrenze nach unten mitgeführte Sollwert "Spiel nach oben" erhält, kann der Sollwert auch wieder soweit wie möglich nach oben angepasst werden.

D.h., der Sollwert kann das ihm durch die Verschiebung der oberen Leistungsfenstergrenze nach oben zur Verfügung gestellte (Leistungs-)Spiel ausnutzen und sich soweit wie möglich, d.h. begrenzt wieder durch die sich nach oben verschiebende Leistungsfenstergrenze, nach oben in Richtung des ursprünglich, vorgegebenen außerhalb des damaligen Leistungsfensters liegenden Sollwertes verschieben.

Dieses kann solange erfolgen, bis der Sollwert das ursprünglich vorgegebene außerhalb des damaligen Leistungsfensters liegende Niveau erreicht oder ein neuer Sollwert vorgegeben wird, welcher innerhalb des aktuellen Leistungsfensters liegt.

Alternativ kann der Sollwert aber auch zunächst noch auf dem Niveau bei sich nach oben verschiebender oberer Leistungsfenstergrenze belassen werden, solange bis ein neuer aktueller Sollwert vorgegeben wird.

Entsprechendes gilt auch für plötzlich unterhalb der unteren Grenze des Leistungsfensters liegende aktuelle Sollwerte.

Damit bleibt das solarthermische Kraftwerk, dessen primäre Wärmezufuhr nicht frei anpassbar ist, in jedem Fall - im Gegensatz zu bisherigen Lösungen - leistungs- und/oder frequenzregelfähig, d.h. im Leistungsregelbetrieb, und damit primär- und sekundärregelfähig.

Der Betreiber erhält damit weiterhin die entsprechenden Vergütungen. Zur Information können die Grenzen des Leistungsfensters bzw. des aktuellen Leistungsbereichs auch an den Lastverteiler übermittelt werden.

Das hierzu entsprechende erfindungsgemäße solarthermische Kraftwerk weist ein Datenverarbeitungsmittel, insbesondere eine programmierte Recheneinheit, insbesondere implementiert in einer Blockführung, auf, welches derart eingerichtet ist, dass das erfindungsgemäße Verfahren zur Sollwertanpassung eines Sollwerts durchführt wird.

Damit ermöglicht das erfindungsgemäße Verfahren zur Sollwertanpassung eines Sollwerts wie auch das entsprechende erfindungsgemäße solarthermische Kraftwerk eine automatisierte Leistungsregelung und/oder Frequenzregelung bzw. Primär- und/oder Sekundärfrequenzregelung, weil hier der vorgegebene oder angepasste Sollwert dieses solarthermischen Kraftwerks dann (immer) innerhalb dieses Leistungsfensters liegt, wo eine Leistungsregelung, wie eine elektrische Leistungsrampe, die Sekundär- oder die Primärregelung, dieses solarthermischen Kraftwerks immer möglich bzw. gewährleistet ist.

Die Erfindung erweist sich in zahlreicher Hinsicht erheblich vorteilhaft.

So ermöglicht die Erfindung einen automatischen bzw. automatisierten Leistungsregelbetrieb des solarthermischen Kraftwerks. Insbesondere ermöglicht die Erfindung eine Frequenz- bzw. Primär- und/oder Sekundärregelfähigkeit des solarthermischen Kraftwerks.

Damit können geforderte Netzanschlussbedingungen seitens eines erfindungsgemäß betriebenen solarthermischen Kraftwerks erfüllt werden. Auch erhält der Anlagenbetreiber entsprechende Vergütungen für die Primär- und/oder Sekundärregelung.

Bevorzugte Weiterbildungen der Erfindung ergeben sich auch aus den abhängigen Ansprüchen. Die beschriebenen Weiterbildungen beziehen sich sowohl auf das erfindungsgemäße Verfahren als auch auf das erfindungsgemäße Kraftwerk.

Insbesondere ist es zweckmäßig, das erfindungsgemäße Verfahren oder deren Weiterbildung in eine Blockführung des solarthermischen Kraftwerks zu implementieren, welche dann das erfindungsgemäße Verfahren und/oder deren Weiterbildungen ausführen - und so entsprechend das solarthermische Kraftwerk steuern und/oder regeln bzw. fahren kann.

Es ist weiter zweckmäßig, das solarthermische Kraftwerk so zu fahren bzw. die Sollwerte so einzustellen, dass diese - im Falle einer Anpassung - auf/an der Grenze des Leistungsfensters liegen. D.h., die Anpassung von außerhalb des Leistungsfensters liegenden aktuellen Sollwerten kann dahingehend erfolgen, dass diese jeweils auf den Wert der Grenze des jeweiligen entsprechenden aktuellen Leistungsbereichs eingestellt werden.

Es ist auch möglich, außerhalb des aktuellen Leistungsbereichs liegende Sollwerte weiter in den jeweiligen aktuellen Leistungsbereich, beispielsweise bis in dessen Mitte, hineinzufahren.

Erst wenn das Leistungsfenster bzw. die ermittelte Fenstergröße einen vorgegebenen Mindestbereich unterschreitet, beispielsweise dadurch, dass sich die Leistung aufgrund der primären Wärmezufuhr bereits der maximalen Anlagenleistung bzw. Kann-Leistung nähert, wird die Anlage auf den Istwert nachgeführt und Lastverteilereinfluss bzw. Primär-/Sekundärregeleinfluss ausgeschaltet.

Zusätzlich kann dieses solarthermische Kraftwerk natürlich ebenfalls entsprechend der Kann-Leistung begrenzt werden, um bei Begrenzungen durch leistungsbestimmende Komponenten einen Ausfall des solarthermischen Kraftwerks zu vermeiden.

Nach einer weiteren bevorzugten Weiterbildung kann insbesondere im automatisierten Betrieb des solarthermischen Kraftwerks vorgesehen sein, dass der aktuell vorgegebene Sollwert dieses Kraftwerks, falls der aktuell vorgegebene Sollwert oberhalb des aktuellen Leistungsbereichs liegt, insbesondere automatisch durch einen Sollwertsteller, nach unten bis zumindest an die obere Regelbereichsgrenze geführt wird. Besonders bevorzugt kann der aktuell vorgegebene Sollwert bis genau auf die obere Grenze des aktuellen Leistungsbereichs nachgeführt werden.

Entsprechend kann vorgesehen werden, dass der aktuell vorgegebene Sollwert des Kraftwerks, falls der aktuell vorgegebene Sollwert unterhalb des aktuellen Leistungsbereichs liegt, insbesondere automatisch durch einen Sollwertsteller, nach oben bis zumindest an die untere Regelbereichsgrenze geführt wird. Besonders bevorzugt kann der aktuell vorgegebene Sollwert bis genau auf die untere Grenze des aktuellen Leistungsbereichs nachgeführt werden.

Besonders bevorzugt erfolgt nach einer Weiterbildung die zusätzliche Wärmezufuhr durch eine Erdgasbefeuerung mittels eines oder mehrerer entsprechender Erdgasbrenner bzw. Erdgaskessel, wobei sich dadurch ein Leistungsbereich aus einer minimalen Erdgasfeuerung und aus einer maximalen Erdgasfeuerung ergibt.

Demzufolge kann dann weiter vorgesehen werden, dass der aktuelle Leistungsbereich unter Verwendung der aktuellen Leistung aus der aktuellen primären Wärmezufuhr zuzüglich der minimal möglichen Leistung aus der zusätzlichen Wärmezufuhr (minimale Wärmezufuhr) sowie unter Verwendung der aktuellen Leistung aus der aktuellen primären Wärmezufuhr zuzüglich der maximal möglichen Leistung aus der zusätzlichen Wärmezufuhr (maximale Wärmezufuhr) bestimmt wird.

Auch kann bei der unteren Regelbereichsgrenze ein ökonomischer Beitrag der zusätzlichen Wärmequelle berücksichtigt werden. So kann es aus wirtschaftlichen Gründen sinnvoll sein, einen - unter ökonomischen Gesichtspunkten zu bestimmenden - Leistungsbeitrag der zusätzlichen Wärmequelle zu berücksichtigen. Die untere Regelbereichsgrenze wird dann um diesen ökonomischen Leistungsbeitrag der zusätzlichen Wärmequelle erhöht, was das Leistungsbereichsfenster um diesen ökonomischen Leistungsbereich verkleinert.

Nach einer bevorzugten Weiterbildung kann auch vorgesehen werden, dass bei der unteren Leistungsreserve - zuzüglich zu der Reserve für die Leistungsregelung - eine weitere Reserve für ein Unterfeuern bei Leistungsrampen und/oder eine weitere Reserve für ein Entladen eines Dampfspeichers und/oder eine Dämpfung ("damping") berücksichtigt werden bzw. wird.

Auch kann vorgesehen sein, dass bei der oberen Leistungsreserve - zuzüglich zu der Reserve für die Leistungsregelung - eine weitere Reserve für ein Überfeuern bei Leistungsrampen und/oder eine weitere Reserve für ein Laden eines Dampfspeichers und/oder für eine Dämpfung ("damping") berücksichtigt werden bzw. wird.

Bei einer bevorzugten Weiterbildung wird die untere Regelbereichsgrenze durch die aktuelle Leistung aus der aktuellen primären Wärmezufuhr zuzüglich der minimal möglichen Leistung aus der zusätzlichen Wärmezufuhr, zuzüglich des ökonomischen Leistungsbeitrags der zusätzlichen Wärmequelle sowie zuzüglich der unteren Leistungsreserve bestimmt.

Diese untere Regelbereichsgrenze kann beispielsweise mathematisch wie folgt umschrieben bzw. ausgedrückt werden: aktuelle primäre Wärmezufuhr + minimale zusätzliche Wärmzufuhr, beispielsweise minimales Erdgasfeuer, + ökonomischer Leistungsbeitrag der zusätzlichen Wärmequelle + untere Leistungsreserve, beispielsweise Reserve für Unterfeuern bei Leistungsrampen, Leistungsregelreserve, "damping" - Reserve und Reserve für ggf. Maßnahmen im Zuge der Primärregelung.

Nach einer weiteren, bevorzugten Weiterbildung wird die obere Regelbereichsgrenze durch die aktuelle Leistung aus der aktuellen primären Wärmezufuhr zuzüglich der maximal möglichen Leistung aus der zusätzlichen Wärmezufuhr sowie abzüglich der oberen Leistungsreserve bestimmt.

Auch diese obere Regelbereichsgrenze kann beispielsweise wie folgt mathematisch umschrieben bzw. ausgedrückt werden: aktuelle primäre Wärmezufuhr + maximale zusätzliche Wärmezufuhr, beispielsweise zusätzliches Erdgasfeuer, - obere Leistungsreserve, beispielsweise Reserve für Überfeuern bei Leistungsrampen, Leistungsregelreserve, "damping" - Reserve und Reserve für ggf. Maßnahmen im Zuge der Primärregelung.

Bei einer weiteren bevorzugten Weiterbildung ist vorgesehen, dass der aktuelle Leistungsbereich des solarthermischen Kraftwerks einem Sollwertsteller dieses Dampfkraftwerks mitgeteilt wird, welcher den aktuell vorgegebenen Sollwert dieses Kraftwerks, falls dieser außerhalb des aktuellen Leistungsbereichs liegt, anpasst, d.h. in den aktuellen Leistungsbereich fährt.

Auch kann vorgesehen sein, dass die untere Regelbereichsgrenze und/oder die obere Regelbereichsgrenze und/oder der aktuelle Leistungsbereich des solarthermischen Kraftwerks an einen Lastverteiler eines Stromverteilernetzes, an welchem dieses solarthermische Kraftwerk angeschlossen ist, übermittelt wird.

Bevorzugt ist auch vorgesehen, dass, wenn der ermittelte aktuelle Leistungsbereich des solarthermischen Kraftwerks einen vorgegebenen Mindestbereich unterschreitet, der aktuell vorgegebene Sollwert auf einen Istwert nachgeführt wird und/oder ein Lastverteilereinfluss und/oder ein Primär-/Sekundärregeleinfluss ausgeschaltet wird.

Besonders bevorzugt wird die Erfindung bzw. die erfindungsgemäße Sollwertanpassung jeweils durchgeführt für mehrere Zeitpunkte, insbesondere eine Vielzahl von Zeitpunkten, eines vorgegebenen Zeitintervalls während des Betriebs des solarthermischen Kraftwerks.

Dabei kann das Zeitintervall eine vorgegebene Betriebsdauer dieses Dampfkraftwerks sein. Die Zeitpunkte können eine Zeitreihe in dem Zeitintervall bilden.

So kann die Erfindung während des Betriebs dieses solarthermischen Kraftwerks zu einem vorgebbaren Zeitpunkt und für eine vorgebbare Zeitdauer zu- bzw. eingeschaltet werden.

Das zuvor, d.h. vor dem Zuschaltzeitpunkt, nach der aktuell zur Verfügung stehenden primären Wärmemenge gefahrene solarthermische Kraftwerk wird dann bei zugeschalteter bzw. eingeschalteter Erfindung für die vorgegebene Zeitdauer in einem (automatischen) Leistungsfolgebetrieb gefahren.

Auch ist bevorzugt vorgesehen, die Erfindung bzw. die erfindungsgemäße Sollwertanpassung zu einer automatischen Leistungsregelung des solarthermischen Kraftwerks einzusetzen. Dabei kann dann für eine Vielzahl von Zeitpunkten einer Zeitreihe aus einem vorgebbaren Betriebsdauerintervall dieses Kraftwerks jeweils die Erfindung bzw. die erfindungsgemäße Vorgehensweise durchgeführt werden.

D.h., jedes Mal wenn einer der aktuell vorgegebenen Sollwerte dieses solarthermischen Kraftwerks außerhalb des jeweiligen erfindungsgemäßen aktuellen Leistungsbereichs liegt, wird dann dieser aktuelle Sollwert automatisch, insbesondere durch einen Sollwertsteller dieses solarthermischen Kraftwerks, an den aktuellen Leistungsbereich angepasst. Der aktuelle, außerhalb der aktuellen Leistungsbereichs liegende Sollwert wird in den aktuellen Leistungsbereich, bevorzugt auf dessen Grenze, eingestellt.

Die Leistung des solarthermischen Kraftwerks wird unter Verwendung der aktuell vorgegebenen und gegebenenfalls angepassten Sollwerte gefahren bzw. geregelt.

Die Vorgabe des Sollwerts kann dabei durch einen Operateur der Anlage, beispielsweise einem Leitstandsfahrer, oder durch einen Lastverteiler des Stromnetzes erfolgen. Die Sollwerte können auf einen Sollwertsteller geschaltet werden, welcher die Ist-Leistung des solarthermischen Kraftwerks entsprechend steuert/regelt.

Weiter kann vorgesehen sein, dass die erfindungsgemäßen Datenverarbeitungsmittel Bestandteil einer Blockführung des solarthermischen Kraftwerks ist.

Nach einer besonders bevorzugten Weiterbildung weist das solarthermische Kraftwerk eben eine solche Blockführung auf, welche eingerichtet ist zur Durchführung der Erfindung.

Die Frequenzregelfähigkeit kann weiter verbessert werden, wenn der sekundäre Kreislauf zumindest einen thermischen Energiespeicher aufweist, welcher für Leistungsänderungen im Rahmen der Frequenzregelung genutzt wird.

Ein solcher thermischer Energiespeicher - im sekundären Kreislauf - kann dabei auf in einem Prozessmedium des sekundären Kreislaufs, wie in einem Speisewasser bzw. Wasserdampf eines Wasser-Dampf-Kreislaufes, immanenten Energiespeicher beruhen.

Beispielsweise stellen eine Drosselung von einem Hochdruck-Turbinenregelventil, eine Überlasteinleitung zur Hochdruckteilturbine, ein Kondensatstau, eine speisewasserseitige Umgehung von Hochdruckvorwärmern sowie eine Androsselung der Anzapfdampfleitungen zu den Hochdruckvorwärmern bekannte thermische Energiespeicher dar ("Flexible Load Operation and Frequency Support for Steam Turbine Power Plants", Wichtmann et al., VGB PowerTech 7/2007, Seiten 49 - 55).

Ein solcher thermischer Energiespeicher erlaubt - bei "Abruf" der gespeicherten Energie, z.B. durch Änderung der Drosselung oder Aufbau des Kondensatstaus - in bestimmten Maße eine Leistungsänderung im sekundären Kreislauf. Allerdings entleert sich dabei, d.h. bei "Abruf" dort gespeicherter Energie, der thermische Energiespeicher.

Hier kann dann besonders bevorzugt vorgesehen sein, dass die zusätzliche Wärmequelle genutzt wird, um zumindest einen thermischen Energiespeicher im sekundären Kreislauf aufzufüllen.

Zweckmäßiger Weise, d.h. um erhöhte und schnelle Leistungsanpassungen des solarthermischen Kraftwerks zu ermöglichen, können mehrere solcher thermischen Energiespeicher im sekundären Kreislauf verwendet werden, deren jeder unter Verwendung der zusätzlichen Wärmequelle wieder gefüllt werden kann.

Anschaulich bzw. vereinfacht ausgedrückt, ein nicht mehr voller thermischer Energiespeicher im sekundären Kreislauf wird unter Nutzung der zusätzlichen Wärmequelle im primären Kreislauf gefüllt.

Hierzu kann die zusätzliche Wärmezufuhr auf das Wärmeträgermedium durch die zusätzliche Wärmequelle, beispielsweise ein Erdgasbrenner, im primären Kreislauf aktiviert oder erhöht werden, was - durch die (thermische) Koppelung des primären mit dem sekundären Kreislauf - zu einem zusätzlichen Energieeintrag in das Prozessmedium des sekundären Kreislaufs führt. Dieser zusätzliche Energieeintrag im Prozessmedium des sekundären Kreislaufs kann dann für das (Wieder-)Befüllen des/der thermischen Energiespeichers im sekundären Kreislauf genutzt werden - ohne dass sich dadurch eine Leistung des solarthermischen Kraftwerks ändert bzw. absinkt.

Damit ermöglicht diese Nutzung der zusätzlichen Wärmequelle im Primärkreislauf für das Wiederbefüllen des thermischen Energiespeichers eine leistungsfähigere Leistungsregelung und/oder Frequenzregelung bzw. Primär- und/oder Sekundärfrequenzregelung bei diesem solarthermischen Kraftwerk, weil über das (Wieder-)Befüllen des thermischen Energiespeichers im sekundären Kreislauf - unabhängig von der abgegebenen Kraftwerksleistung - dieser "immer wieder aufgefüllte" thermische Energiespeicher nahezu ständig für Leistungsänderungen im Rahmen der Frequenzregelung bzw. Sekundär- und/oder Primärregelung bei dem solarthermischen Kraftwerk zur Verfügung steht.

Auch kann besonders bevorzugt das Befüllen des thermischen Energiespeichers mittels der zusätzlichen Wärmequelle durchgeführt werden abhängig von einem Befüllungsgrad des thermischen Energiespeichers.

Unterschreitet der Befüllungsgrad des thermischen Energiespeichers einen bestimmen Level, so kann er befüllt werden. Damit kann der thermische Energiespeicher immer auf oder über einem vorgegebenen Befüllungsgrad vorgehalten werden. Insbesondere kann der thermische Energiespeicher immer voll gefüllt werden bzw. sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Insbesondere sind diese Merkmale jeweils einzeln und in beliebiger geeigneter Kombination mit dem erfindungsgemäßen Verfahren und/oder mit der Vorrichtung gemäß dem jeweiligen unabhängigen Anspruch kombinierbar.

In den Figuren ist ein Ausführungsbeispiel der Erfindung dargestellt, welches im Weiteren näher erläutert wird.

Es zeigen
- FIG 1: einen Regel-/Steuer-/Anlagenplan eines leistungsregelfähigen solarthermischen Kraftwerks gemäß einem Ausführungsbeispiel,
- FIG 2: eine schematische Darstellung eines Leistungsfensters des leistungsregelfähigen solarthermischen Kraftwerks nach FIG 1,
- FIG 3: Leistungsbereiche und Leistungsverhalten eines solarthermischen Kraftwerks im Ist-Betrieb und im Leistungsfolgebetrieb gemäß dem Ausführungsbeispiel.

### Ausführungsbeispiel: Automatisiert leistungsregelfähiges solarthermisches Kraftwerk

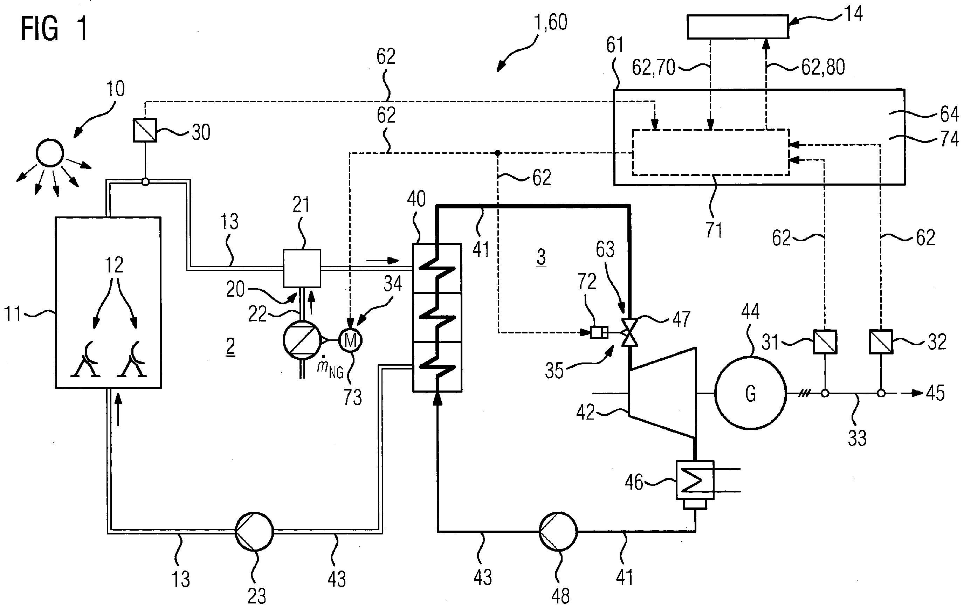

FIG 1 zeigt einen Regel-/Steuer-/Anlagenplan 60 eines leistungsregelfähigen ("load setting mode") solarthermischen Kraftwerks 1.

Abweichend von bisher üblichen solarthermischen Kraftwerken ist das hier beschriebene Kraftwerk 1 - zusätzlich zum üblichen, bekannten Ist-Betrieb der Anlage a, c bzw. 72 - automatisiert leistungsregelfähig fahrbar ("load setting mode" / Leistungsfolgebetrieb) b bzw. 71.

Die Leistungsregelfähigkeit dieses solarthermischen Kraftwerks 1 beinhaltet dabei auch die Fähigkeit der Sekundärregelung ("Secondary grid frequency control").

Sämtliche in dem solarthermischen Kraftwerk 1 anfallenden Informationen, wie beispielsweise Messwerte, Prozess- oder Zustandsdaten, werden in einer Leitwarte angezeigt und dort in einer zentralen Recheneinheit 64, einer Blockführung 61 - als zentrales Kontroll- bzw. Steuer- und/oder Regelorgan des solarthermischen Kraftwerks 1, ausgewertet, wobei Betriebszustände einzelner Kraftwerkskomponenten angezeigt, ausgewertet, kontrolliert, gesteuert und/oder geregelt werden.

Über Steuerorgane kann dort von einem Leitstandsfahrer (Operateur) über die Blockführung - als zentraler Bestandteil des Leitrechners - oder automatisiert in den Betriebsablauf des solarthermischen Kraftwerks 1 eingegriffen - und dadurch die Anlage gefahren - werden, beispielsweise durch Öffnen oder Schließen einer Armatur oder eines Ventils oder auch durch eine Veränderung einer zugeführten Brennstoffmenge.

Insbesondere auch die Leistungsregelung und/oder Frequenz- bzw. Primär- und/oder Sekundärfrequenzregelung und der automatische Lastfolgebetrieb 71 des solarthermischen Kraftwerks 1 wird über die Blockführung 61 gesteuert.

Diese solarthermische Kraftwerk 1, auch im Folgenden nur kurz Kraftwerk 1, weist zwei - über einen mehrstufigen Wärmetauscher 40 (thermisch) gekoppelte - Kreisläufe 2, 3, einen Primär- (solarer Kreislauf) 2 und einen Sekundärkreislauf (Wasser-Dampf-Kreislauf) 3 auf, d.h. es arbeitet nach einem Zweikreisprinzip.

In dem Primärkreislauf bzw. solaren Kreislauf 2 wird ein zumeist eine Vielzahl von in einem Solarkollektorenfeld 11 angeordneten Solarkollektoren 12 durchströmendes Wärmeträgermedium 13, hier ein (Thermo-)Öl 13, dort durch Sonneneinstrahlung 10 erwärmt (primäre Wärme-/Energiequelle bzw. primäre Energie-/Wärmezufuhr bzw. -eintrag, Primärenergie/-quelle 10).

Das erwärmte Wärmeträgermedium 13 durchströmt weiter einen erdgasbefeuerten Erdgaskessel 21, in welchem das "primär erwärmte" Thermoöl 13 weiter erwärmt wird 20 bzw. werden kann (zusätzliche Wärmequelle/-zufuhr, zusätzliche Energie/-quelle 20).

Diese zusätzliche Wärmequelle 20 wird einerseits genutzt, um die Anlage 1 wirtschaftlich optimal zu fahren, die - nicht beeinflussbaren Schwankungen unterliegende - Leistung aus der primären Energiequelle 10 zu verstetigen sowie - wie nachfolgend im Detail beschreiben - die Frequenzregelfähigkeit und den automatische Lastfolgebetrieb 71 des Kraftwerks 1 zu ermöglichen. Andererseits wird die zusätzliche Wärmequelle 20 dazu genutzt, um das Thermoöl 13 flüssig zu halten ("Anti-Freeze-Schutz").

Anschließend an die zusätzliche Wärmequelle 20 durchströmt das Thermoöl 13 den Wärmetauscher 40, wo es - zumindest teilweise - die aufgenommene thermische Energie aus primärer und gegebenenfalls zusätzlicher Wärmezufuhr 10, 20 an den Sekundärkreislauf 3, den Wasser-Dampf-Kreislauf 3, bzw. an das dortige Prozessmedium 41, d.h. an ein (Speise-)Wasser 41, überträgt.

Danach strömt - gefördert durch eine Förderpumpe 23 - das - jetzt abgekühlte - Wärmeträgermedium 13 bzw. Thermoöl 13 zurück zu den Solarkollektoren 12 bzw. zum Solarfeld 11, wodurch der primäre Kreislauf 2 bzw. der solare Kreislauf 2 geschlossen wird.

Durch den Wärmeübertrag vom Primärkreislauf 2 an den Sekundärkreislauf 3 bzw. an den Wasser-Dampf-Kreislauf 3 wird dort das (Speise-)Wasser 41 in Wasserdampf 41 umgewandelt, d.h. es wird aufgewärmt, verdampft und überhitzt, und strömt über Rohrleitungen 43 zur Dampfturbine 42, in der der Wasserdampf 41 einen Teil seiner Energie durch Entspannung als Bewegungsenergie an die Turbine 42 abgibt.

Durch den an die Turbine 42 gekoppelten Generator 44 wird die mechanische Leistung dann in elektrische Leistung umgewandelt, welche als elektrischer Strom in ein Stromnetz 33 eingespeist wird 45.

Unterhalb der Turbine ist ein Kondensator 46 angeordnet, in dem der Dampf 41 - nach Entspannung in der Turbine 42 - den größten Teil seiner Wärme an Kühlwasser überträgt. Während dieses Vorganges verflüssigt sich der Dampf 41 durch Kondensation.

Eine Speisewasserpumpe 48 fördert das entstandene flüssige Wasser 41 als Speisewasser 41 erneut zu dem mehrstufigen Wärmetauscher 40, womit auch der sekundäre Kreislauf 3 geschlossen ist.

In dem sekundären Kreislauf 3, d.h. in dem Wasser-Dampf-Kreislauf 3, sind verschiedene thermische Speicher 63 realisiert, welche auf einem dem Speisewasser 41 bzw. Wasserdampf 41 immanenten Energiespeicher beruhen.

FIG 1 verdeutlicht beispielsweise hier einen solchen thermischen Speicher 63 in Form einer Drosselung von einem Hochdruck-Turbinenregelventil 47 bzw. einer Hochdruck-Turbinenregelventil-Drossel 47.

Andere - nicht näher ausgeführte - thermische Speicher 63 sind eine Überlasteinleitung zur Hochdruckteilturbine, ein Kondensatstau, eine speisewasserseitige Umgehung von Hochdruckvorwärmern sowie eine Androsselung der Anzapfdampfleitungen zu den Hochdruckvorwärmern.

In diesem Fall erlaubt eine - durch die Blockführung 61 gesteuerte/geregelte - Androsselung des Hochdruck-Turbinenregelventils 63 den gezielten "Abruf" der Speisewasser 41 bzw. Wasserdampf 41 immanenten Energie, wodurch eine gezielte Leistungsänderung im sekundären Kreislauf 3 - im Rahmen der Frequenzregelung - möglich ist.

Ist aus dem - hier beispielhaft beschriebenen - thermischen Speicher 63, d.h. der Drosselung des Hochdruck-Turbinenregelventils 47, für die geforderte Leistungsänderung bei der Frequenzregelung Energie/Leistung abgerufen worden, so muss dieser thermische Speicher 63, 47 wieder gefüllt werden.

Dieses erfolgt - ebenfalls gesteuert über die Blockführung 61 - durch die zusätzliche bzw. erhöhte Erdgaszufeuerung 20 im solaren Kreislauf 2, wodurch zusätzliche thermische Energie in das Thermoöl 13 eingebracht wird.

Über den Wärmetauscher 40 wird dieser zusätzliche Energieeintrag, in den sekundären Kreislauf 3 übertragen und steht dort für das Wiederauffüllen des genutzten thermischen Speichers 63, 47 zur Verfügung. Die Drosselung 47 wird durch Blockführung 61 wieder in den ursprünglichen Zustand gefahren - und der thermische Speicher 63, 47 ist wieder gefüllt.

Wie FIG 1 zeigt, werden dazu - über entsprechende Leitungsverbindungen 62 - der Blockführung 61 hier insbesondere die Leistung des Solarfeldes 30, der Betriebszustand des Erdgasbefeuerung 34, der Zustand der Androsselung 35 sowie die vom Kraftwerk 1 erzeugte Leistung 31 wie auch die Netzfrequenz 32 des Stromnetzes 33 übermittelt.

Wie FIG 1 weiter verdeutlicht, erfolgt dann die Steuerung der Erdgasbefeuerung 20 - über Steuerung/Regelung des Erdgasstroms 22, 73 - und die Drosselung des Hochdruck-Turbinenregelventils 47 - über die Steuerung/Regelung der Hochdruck-Turbinenregelventil-Drossel 47, 72- ebenfalls durch die Blockführung 61.

D.h., die Anlage 1 kann so im frequenz- bzw. primäre und/oder sekundärregelfähigen Lastfolgebetrieb 71 - nach automatischer Vorgabe des Lastverteilers 14 - gefahren werden. Die Anlage 1 bzw. die Turbine 42 wird dazu in Leistungsregelung, d.h. in modifiziertem Gleitdruckbetrieb mit gedrosselten Ventilen, gefahren.

Begrenzt wird bei dem solarthermischen Kraftwerk 1 die erreichbare Leistung lediglich durch eine ermittelte Kann-Leistung 96, d.h. eine maximal fahrbare Leistung des Kraftwerks 1 in Abhängigkeit vom Zustand einzelner leistungsbegrenzender Aggregate (z.B. Speisepumpen in Betrieb).

### Fahrweise des Kraftwerks 1 im "load setting mode" 71

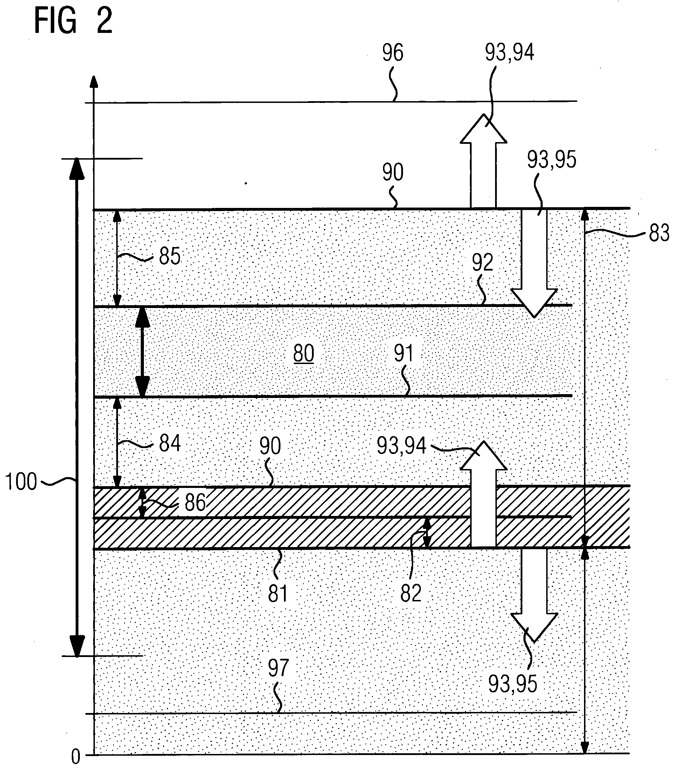

FIG 2 verdeutlicht schematisch den Leistungsfolgebetrieb/"load setting mode" 71 bzw. den entsprechenden Leistungsbereich 80 des Kraftwerks 1 für den Leistungsfolgebetrieb b bzw. 71.

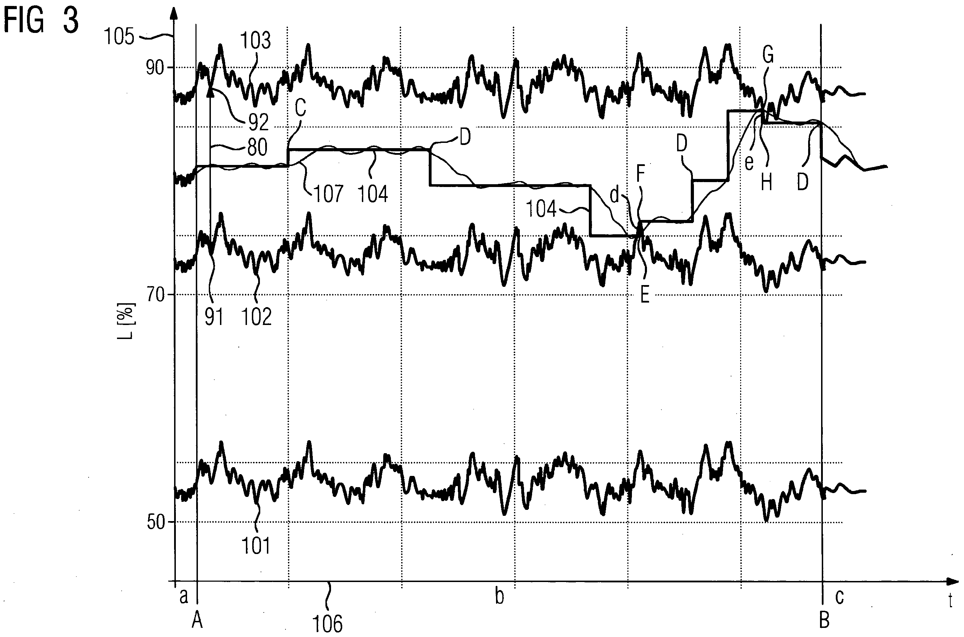

Im durch die Anlage 1 möglichen Leistungsfolgebetrieb b bzw. 71 wird die Anlage im modifizierten Gleitdruckbetrieb mit gedrosselten Ventilen gefahren. Entsprechende Leistungskurven bzw. das Betriebsverhalten sind bzw. ist in FIG 3 näher dargestellt.

Wie zunächst FIG 2 zeigt, unterliegt der Leistungsbereich (Leistungsfenster/"range of adaptability") 80, in welchem das Kraftwerk 1 automatisiert leistungsregelfähig, d.h. im "load setting mode" 71, gefahren werden kann, bestimmten Einschränkungen.

Innerhalb dieses Leistungsfensters 80 muss der Leistungssollwert (Sollwert) 70 der Anlage 1 liegen, um automatisiert leistungsregelfähig zu sein. Dazu werden die Grenzen 90 des Leistungsfensters 80 als Begrenzungen auf einen Leistungssollwertsteller (nicht bezeichnet) geschaltet.

Nach unten hin wird das Leistungsfenster 80 zunächst begrenzt durch die Leistung aus der aktuell zur Verfügung stehenden Primärenergie 81 zuzüglich der Leistung aus der minimal möglichen feuerbaren Erdgasmenge 82; nach oben hin wird das Leistungsfenster 80 zunächst begrenzt durch die Leistung aus der aktuellen zur Verfügung stehenden Primärenergie 81 zuzüglich der Leistung aus der maximal möglichen feuerbaren Erdgasmenge 83.

Weiterhin wird an der unteren Grenze 90 des Leistungsfensters 80 ein Erdgasfeuerbetrag zur Erreichung des wirtschaftlichen Optimums 86 vorgesehen. D.h., die untere Grenze 90 des Leistungsfensters 80 verschiebt sich um diesen - ökonomische Randbedingungen berücksichtigenden - Betrag nach oben.

Um automatisiert leistungsregelfähig zu sein, werden weiter an den Grenzen 90 des Leistungsfensters 80 eine untere Leistungsreserve 84 sowie eine obere Leistungsreserve 85 eingebaut. D.h., das Leistungsfenster 80 verringert sich (weiter) jeweils um diese untere bzw. obere Leistungsreserve 84, 85.

Diese Leistungsreserven 84, 85 stellen sicher, dass das Kraftwerk 1, solange es innerhalb dieser "Reservengrenzen" 91 (untere Grenze des Leistungsbereichs/-fensters im "load setting mode"), 92 (obere Grenze des Leistungsbereichs/-fensters im "load setting mode") gefahren wird, d.h. die Sollwerte werden innerhalb dieser Grenzen 91, 92 eingestellt, leistungsregelfähig ist.

Die untere Leistungsreserve 84 setzt sich zusammen aus einer Reserve für das Unterfeuern bei Leistungsrampen, einer "damping"-Reserve, einer Reserve für ein Entladen des Dampfspeichers sowie der Reserve für die Leistungsregelung ("load control") und der Reserve für die Primärregelung; die obere Leistungsreserve 85 setzt sich zusammen aus einer Reserve für das Überfeuern bei Leistungsrampen, der "damping"-Reserve, einer Reserve für ein Laden des Dampfspeichers sowie für die Reserve für die Leistungsregelung und die Reserve für die Primärregelung.

Entsprechend einer Leistungserhöhung bzw. einer Leistungsverringerung der Anlage im "load setting mode" muss der Dampfdruck erhöht bzw. verringert werden. Dazu muss eine entsprechende, ausreichende Menge an Reserveleistung für die jeweilige zu fahrende Leistungsrampe zur Verfügung gestellt werden.

Auch für die Leistungsregelung muss eine bestimmte Leistungsreserve vorgehalten werden, welche sich aus den Anforderungen aus Leistungsregelung der Turbine 42 und der Sekundärregelung ergeben.

Dieses Leistungsfenster 80, innerhalb dessen der Sollwert 70 der Anlage 1 liegen darf, ist dabei dynamisch, d.h. es verschiebt sich während des Betriebs des Kraftwerks 1 in Abhängigkeit der - schwankenden bzw. sich ändernden - zur Verfügung stehenden Primärenergie 10, 93. Steht mehr Primärenergie 10 zur Verfügung (erhöhte Sonneneinstrahlung) verschiebt sich das Leistungsfenster 80 nach oben 94; steht weniger Primärenergie (Bewölkung) zur Verfügung verschiebt sich das Leistungsfenster nach unten 95.

Begrenzt wird die erreichbare Leistung des Kraftwerks 1, "range of operation" 100, nach oben lediglich durch eine ermittelte Kannleistung 96, d.h. eine maximal fahrbare Leistung des Kraftwerks 1 in Abhängigkeit vom Zustand einzelner leistungsbegrenzender Aggregate (z.B. Speisepumpen in Betrieb). Nach unten ist die fahrbare Leistung der Anlage 1 lediglich begrenzt durch eine maximale (Minimal-)Last/Leistung 97, welche für einen stabilen Betrieb der Anlage 1 mindestens notwendig ist.

Erst wenn das Leistungsfenster 80 bzw. die ermittelte Fenstergröße einen vorgegebenen Mindestbereich unterschreitet, beispielsweise dadurch, dass sich die Leistung aufgrund der primären Wärmezufuhr 10 bereits der maximalen Anlagenleistung bzw. Kann-Leistung 96 nähert, wird die Anlage 1 auf den Istwert nachgeführt und Lastverteilereinfluss bzw. Primär-/Sekundärregeleinfluss ausgeschaltet (Ist-Betrieb 74).

Wie FIG 1 zeigt, wird das Kraftwerk 1 durch - seitens des Lastverteilers 14 - Vorgabe des (Leistungs-)Sollwerts, MWel, 70 gefahren. Aus diesem vorgegebenen Sollwert 70 werden entsprechende Sollwerte für die Erdgasfeuerungssteuerung 73 und die Turbinensteuerung 72 ermittelt - und entsprechend dieser die Anlage 1 geregelt bzw. gefahren.

Zur Information werden die Grenzen 90 des aktuellen Leistungsfensters 80 auch an den Lastverteiler 14 übermittelt.

FIG 3 zeigt in Kurven die Leistungsbereiche und das Betriebs-/Leistungsverhalten des solarthermischen Kraftwerks 1 im Ist-Betrieb a, c bzw. 74 sowie im Leistungsfolgebetrieb b bzw. 71 ("load setting mode").

Dabei sind die dargestellten Kurven jeweils als normierte Kurven in [%] (Achse 105) über die Zeit t (Achse 106) angegeben.

Die Kurve 101 zeigt den Verlauf der durch die primäre Wärmequelle-/zufuhr 10 zur Verfügung stehenden Leistung. Die Kurve 104 zeigt den Verlauf des (Leistungs-)Sollwertes der Anlage 1; mit Kurve 107 ist die gefahrene Ist-Leistung der Anlage 1 dargestellt.

Während der Betriebsphasen a und c der Anlage 1 wird das solarthermische Kraftwerk 1 im üblichen Ist-Betrieb 74 - vom Operateur per Hand - gefahren. Entsprechend der zu Verfügung stehenden Leistung aus der primären Wärmequelle/-zufuhr 10 wird der Sollwert 70 der Anlage 1 eingestellt, d.h. der Sollwert 70 folgt dem Verlauf 1 der Primärenergie 10, 101.

Zum Zeitpunkt A wird das Kraftwerk 1 in den Leistungsfolgebetrieb b bzw. 71 versetzt, in welchem die Anlage bis zum Zeitpunkt B gefahren wird.

Zum Zeitpunkt A des Einsetzens des Leistungsfolgebetriebs 71 "öffnet" sich das Leistungsfenster 80 mit der in FIG 3 dargestellten unteren Leistungsfenstergrenze 102 bzw. 91 und der dargestellten oberen Leistungsfenstergrenze 103 bzw. 92. Der Sollwert wird zum Zeitpunkt A in etwa in die Mitte des Leistungsfensters 80 gefahren.

Wie FIG 3 weiter zeigt, verschiebt sich mit Änderung der jeweils aktuell zur Verfügung stehenden "Primärenergie" 10, 101 das Leistungsfenster 80, innerhalb dessen der Sollwert 70 - für die Gewährleistung der Leistungsregelung 71 bei dem solarthermischen Kraftwerk 1 - liegen darf (Verlauf C), nach oben bzw. unten.

Damit verbunden ist eine automatische Anpassung des möglichen Einstellbereiches des Sollwertstellers.

Wie FIG 3 zeigt, wird ein aktueller Sollwert 70, der infolge einer Verringerung der Primärenergie 10 nun plötzlich oberhalb der oberen Grenze 103, 92 des Leistungsfensters 80 liegen würde (Punkt G), entsprechend vom Sollwertsteller angepasst, d.h. er wird von der sinkenden oberen Begrenzung 103 automatisch mit nach unten geführt (Verlauf/Phase e).

Sobald sich, aufgrund einer Änderung bzw. Erhöhung der Primärenergie 10, die obere Begrenzung 103 wieder nach oben verschiebt (Punkt H), wird der Sollwert zunächst noch auf dem Niveau bei Punkt H belassen, solange bis ein neuer aktueller Sollwert 70 vorgegeben wird (Punkt D).

Entsprechendes gilt auch für plötzlich unterhalb der unteren Grenze 102 des Leistungsfensters 80 liegende aktuelle Sollwerte 70.

Wie hier FIG 3 zeigt, wird ein aktueller Sollwert 70, der infolge einer Erhöhung der Primärenergie 10 nun plötzlich unterhalb der unteren Grenze 102, 91 des Leistungsfensters 80 liegen würde (Punkt E), entsprechend vom Sollwertsteller angepasst, d.h. er wird von der ansteigenden unteren Begrenzung 102 automatisch mit nach oben geführt (Verlauf/Phase d).

Sobald sich, aufgrund einer Änderung bzw. Verringerung der Primärenergie 10, die untere Begrenzung 102 wieder nach unten verschiebt (Punkt F), wird der Sollwert 70 zunächst noch auf dem Niveau bei Punkt F belassen, solange bis ein neuer aktueller Sollwert 70 vorgegeben wird (Punkt D).

Zum Zeitpunkt B verlässt die Anlage 1 den Leistungsfolgebetrieb b und geht wieder in den Ist-Betrieb c bzw. 74 über. Das Leistungsfenster 80 "schließt" sich. Der Sollwert 70 folgt wieder unmittelbar der Primärenergie 10.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Sollwertanpassung eines Sollwerts, insbesondere für eine automatische Leistungsregelung, bei einem solarthermischen Dampfkraftwerk (1) mit einer nicht anpassbaren primären Wärmequelle (10) und einer zusätzlichen Wärmequelle (20),
**dadurch gekennzeichnet, dass**
- für zumindest einen vorgegebenen Zeitpunkt während eines Betriebs des solarthermischen Dampfkraftwerks (1) ein aktueller Leistungsbereich (80) für dieses solarthermische Dampfkraftwerk (1) ermittelt wird,
- wobei der aktuelle Leistungsbereich (80) dieses solarthermischen Dampfkraftwerks (1) durch eine untere Regelbereichsgrenze (91) und durch eine obere Regelbereichsgrenze (92) begrenzt wird und
- der aktuelle Leistungsbereich (80) unter Verwendung einer aktuellen Leistung aus der primären Wärmequelle (81) (10) sowie unter Verwendung eines Leistungsbereichs aus der zusätzlichen Wärmequelle (20) (82) (83) bestimmt wird,
- wobei bei der unteren Regelbereichsgrenze (91) eine untere Leistungsreserve (84) mit zumindest einem Reserveanteil für eine Leistungsregelung und/oder eine Frequenz- bzw. Primär- und/oder Sekundärfrequenzregelung, berücksichtigt wird,
- wobei bei der oberen Regelbereichsgrenze (92) eine obere Leistungsreserve (85) mit zumindest einem Reserveanteil für die Leistungsregelung und/oder Frequenz- bzw. Primär - und/oder Sekundärfrequenzregelung, berücksichtigt wird und
- bei der Sollwertanpassung ein aktuell vorgegebener Sollwert (70) des solarthermischen Dampfkraftwerks (1), falls der aktuell vorgegebene Sollwert (70) außerhalb des aktuellen Leistungsbereichs (80) liegt, in dem aktuellen Leistungsbereich eingestellt wird (71).

2. Verfahren nach Anspruch 1,
**dadurch gekennzeichnet, dass**
der aktuell vorgegebene Sollwert (70) des solarthermischen Dampfkraftwerks (1), falls der aktuell vorgegebene Sollwert (70) oberhalb des aktuellen Leistungsbereichs (80) liegt, nach unten bis zumindest an die obere Regelbereichsgrenze (92) geführt wird und/oder der aktuell vorgegebene Sollwert (70) dieses solarthermischen Dampfkraftwerks (1), falls der aktuell vorgegebene Sollwert (70) unterhalb des aktuellen Leistungsbereichs (80) liegt, nach oben bis zumindest an die untere Regelbereichsgrenze (91) geführt wird.

3. Verfahren nach mindestens einem der voranstehenden Ansprüche,
**dadurch gekennzeichnet, dass**
der aktuelle Leistungsbereich aus der zusätzlichen Wärmequelle (20), insbesondere einer Erdgasbefeuerung (20), durch eine minimal mögliche Leistung aus der zusätzlichen Wärmequelle (20) (82) sowie durch eine maximal mögliche Leistung aus der zusätzlichen Wärmequelle (20) (83) festgelegt wird.

4. Verfahren nach mindestens einem der voranstehenden Ansprüche,
**dadurch gekennzeichnet, dass**
der aktuelle Leistungsbereich (80) unter Verwendung der aktuellen Leistung aus der primären Wärmequelle (10) (81), insbesondere von Sonnenenergie (10), zuzüglich der minimal möglichen Leistung aus der zusätzlichen Wärmequelle (20) (82) sowie unter Verwendung der aktuellen Leistung aus der primären Wärmequelle (10) (81), insbesondere von Sonnenenergie(10), zuzüglich der maximal möglichen Leistung aus der zusätzlichen Wärmequelle (20) (83) bestimmt wird.

5. Verfahren nach mindestens einem der voranstehenden Ansprüche,
**dadurch gekennzeichnet, dass**
bei der unteren Regelbereichsgrenze (91) ein ökonomischer Beitrag (86) der zusätzlichen Wärmequelle (20) für Erreichung eines wirtschaftlichen Betriebs des solarthermischen Kraftwerks 1, insbesondere für die Erreichung eines wirtschaftlichen Optimums, berücksichtigt wird.

6. Verfahren nach mindestens einem der voranstehenden Ansprüche,
**dadurch gekennzeichnet, dass**
bei der unteren Leistungsreserve (84) zuzüglich zu der Reserve für die Leistungsregelung und/oder Frequenz- bzw. Primär- und/oder Sekundärfrequenzregelung, eine weitere Reserve für ein Unterfeuern und/oder eine weitere Reserve für ein Entladen eines Dampfspeichers und/oder für ein "damping" berücksichtigt werden bzw. wird.

7. Verfahren nach mindestens einem der voranstehenden Ansprüche,
**dadurch gekennzeichnet, dass**
bei der oberen Leistungsreserve (85) zuzüglich zu der Reserve für die Leistungsregelung und/oder Frequenz- bzw. Primär- und/oder Sekundärregelung, eine weitere Reserve für ein Überfeuern und/oder eine weitere Reserve für ein Laden eines Dampfspeichers und/oder für ein "damping" berücksichtigt werden bzw. wird.

8. Verfahren nach mindestens einem der voranstehenden Ansprüche,
**dadurch gekennzeichnet, dass**
die untere Regelbereichsgrenze (91) durch die aktuelle Leistung aus der primären Wärmequelle (10) (81) zuzüglich der minimal möglichen Leistung aus der zusätzlichen Wärmequelle (20) (82) zuzüglich eines ökonomischen Beitrags (86) der zusätzlichen Wärmequelle (20) für Erreichung eines wirtschaftlichen Betriebs des solarthermischen Kraftwerks (1), insbesondere für die Erreichung eines wirtschaftlichen Optimums, sowie zuzüglich der unteren Leistungsreserve (84) bestimmt wird und/oder dass die obere Regelbereichsgrenze (92) durch die aktuelle Leistung aus der primären Wärmequelle (10) (81) zuzüglich der maximal möglichen Leistung aus der Feuerung durch einen zusätzlichen Brennstoff (83) sowie abzüglich der oberen Leistungsreserve (85) bestimmt wird.

9. Verfahren nach mindestens einem der voranstehenden Ansprüche,
**dadurch gekennzeichnet, dass**
der aktuelle Leistungsbereich (80) des solarthermischen Dampfkraftwerks (1) einem Sollwertsteller dieses Dampfkraftwerks (1) mitgeteilt wird, welcher den aktuell vorgegebenen Sollwert (70) dieses solarthermischen Dampfkraftwerks (1), falls dieser außerhalb des aktuellen Leistungsbereichs (80) liegt, anpasst (71).

10. Verfahren nach mindestens einem der voranstehenden Ansprüche,
**dadurch gekennzeichnet, dass**,
wenn der ermittelte aktuelle Leistungsbereich (80) des solarthermischen Dampfkraftwerks (1) einen vorgegebenen Mindestbereich unterschreitet, der aktuell vorgegebene Sollwert (70) auf einen Istwert nachgeführt wird und/oder ein Lastverteilereinfluss und/oder ein Frequenz- bzw. Primär- und oder Sekundärrregeleinfluss ausgeschaltet wird.

11. Verfahren nach mindestens einem der voranstehenden Ansprüche,
jeweils durchgeführt für mehrere Zeitpunkte, insbesondere einer Vielzahl von Zeitpunkten, eines vorgegebenen Zeitintervalls während des Betriebs des solarthermischen Dampfkraftwerks (1).

12. Verfahren nach mindestens dem voranstehenden Anspruch,
**dadurch gekennzeichnet, dass**
das Zeitintervall eine vorgegebene Betriebsdauer des solarthermischen Dampfkraftwerks (1) ist und/oder die Zeitpunkte eine Zeitreihe in dem Zeitintervall bilden.

13. Verfahren nach mindestens einem der voranstehenden Ansprüche,
eingesetzt zu einer automatischen Leistungsregelung (71) des solarthermischen Dampfkraftwerks (1),
- wobei für eine Vielzahl von Zeitpunkten einer Zeitreihe aus einem vorgebbaren Betriebsdauerintervall dieses solarthermischen Dampfkraftwerks (1) jeweils das Verfahren nach mindestens einem der voranstehenden Ansprüchen durchgeführt wird,
- wobei, jedes Mal wenn einer der aktuell vorgegebenen Sollwerte (70) dieses solarthermischen Dampfkraftwerks (1) außerhalb des jeweiligen aktuellen Leistungsbereichs (80) liegt, dieser aktuelle Sollwert (70) automatisch, insbesondere durch einen Sollwertsteller dieses solarthermischen Dampfkraftwerks (1), an den aktuellen Leistungsbereich (80) angepasst wird, insbesondere auf die jeweilige relevante Regelbereichsgrenze (91, 92) eingestellt wird,
- und die Leistung dieses solarthermischen Dampfkraftwerks unter Verwendung der aktuell vorgegebenen und gegebenenfalls angepassten Sollwerte (70) geregelt wird.

14. Solarthermisches Dampfkraftwerk (1) mit einer nicht freianpassbaren primären Wärmequelle (10) und einer zusätzlichen Wärmequelle (20),
gekennzeichnet mit
einem Datenverarbeitungsmittel (64), insbesondere einer programmierten Recheneinheit (64), welches derart eingerichtet ist, dass mindestens eines der in den voranstehenden Verfahrensansprüchen definierten Verfahren durchführbar ist.

15. Solarthermisches Dampfkraftwerk (1) nach mindestens dem voranstehenden Anspruch,
bei der das Datenverarbeitungsmittel (64) Bestandteil einer Blockführung (61) des solarthermischen Dampfkraftwerks (1) ist.

## Claims

1. Method for setpoint adjustment of a setpoint, in particular for automatic power regulation, in the case of a solar thermal steam power plant (1) having a non-adjustable primary heat source (10) and an additional heat source (20), **characterized in that**,
- for at least one prescribed instant during operation of the solar thermal steam power plant (1), a present power range (80) is ascertained for this solar thermal steam power plant (1),
- wherein the present power range (80) of this solar thermal steam power plant (1) is delimited by a lower control range limit (91) and by an upper control range limit (92), and
- the present power range (80) is determined using a present power from the primary heat source (81) (10) and using a power range from the additional heat source (20) (82) (83),
- wherein the lower control range limit (91) takes account of a lower power reserve (84), having at least one reserve component for power regulation and/or frequency regulation, or primary and/or secondary frequency regulation,
- wherein the upper control range limit (92) takes account of an upper power reserve (85), having at least one reserve component for the power regulation and/or frequency regulation, or primary and/or secondary frequency regulation, and
- in the case of the setpoint adjustment, a presently prescribed setpoint (70) of the solar thermal steam power plant (1) is set in the present power range (71) if the presently prescribed setpoint (70) is outside the present power range (80).

2. Method according to Claim 1,
**characterized in that** the presently prescribed setpoint (70) of
the solar thermal steam power plant (1) is down, at least to the upper control range limit (92), if the presently prescribed setpoint (70) is above the present power range (80), and/or the presently prescribed setpoint (70) of this solar thermal steam power plant (1) is brought up, at least to the lower control range limit (91), if the presently prescribed setpoint (70) is below the present power range (80).

3. Method according to at least one of the preceding claims,
**characterized in that**
the present power range from the additional heat source (20), in particular a natural gas firing system (20), is defined by a minimum possible power from the additional heat source (20) (82) and by a maximum possible power from the additional heat source (20) (83).

4. Method according to at least one of the preceding claims,
**characterized in that**
the present power range (80) is determined using the present power from the primary heat source (10) (81), in particular from solar energy (10), plus the minimum possible power from the additional heat source (20) (82), and using the present power from the primary heat source (10) (81), in particular from solar energy (10), plus the maximum possible power from the additional heat source (20) (83).

5. Method according to at least one of the preceding claims,
**characterized in that**
the lower control range limit (91) takes account of an economic contribution (86) of the additional heat source (20) for attainment of an economically efficient operation of the solar thermal power plant 1, in particular for the attainment of an economically efficient optimum.

6. Method according to at least one of the preceding claims,
**characterized in that**
the lower power reserve (84), in addition to taking account of the reserve for the power regulation and/or frequency or primary and/or secondary frequency regulation, takes account of a further reserve for under-firing and/or a further reserve for discharging a steam accumulator and/or for "damping".

7. Method according to at least one of the preceding claims,
**characterized in that**
the upper power reserve (85), in addition to taking account of the reserve for the power regulation and/or frequency, or primary and/or secondary control, takes account of a further reserve for over-firing and/or a further reserve for charging a steam accumulator and/or for "damping".

8. Method according to at least one of the preceding claims,
**characterized in that**
the lower control range limit (91) is determined by the present power from the primary heat source (10) (81), plus the minimum possible power from the additional heat source (20) (82), plus an economic contribution (86) of the additional heat source (20) for attainment of an economically efficient operation of the solar thermal power plant (1), in particular for the attainment of an economically efficient optimum, and plus the lower power reserve (84), and/or the upper control range limit (92) is determined by the present power from the primary heat source (10) (81), plus the maximum possible power from the firing by an additional fuel (83), and less the upper power reserve (85).

9. Method according to at least one of the preceding claims,
**characterized in that** the present power range (80) of the solar thermal power plant (1) is communicated to a setpoint setter of this steam power plant (1) that adjusts (71) the presently prescribed setpoint (70) of this solar thermal power plant (1) if this setpoint is outside of the present power range (80).

10. Method according to at least one of the preceding claims,
**characterized in that**,
if the ascertained present power range (80) of the solar thermal power plant (1) falls below a prescribed minimum range, the presently prescribed setpoint (70) is corrected to an actual value, and/or a load dispatching center influence and/or a frequency or primary and/or secondary control influence are/is switched off.

11. Method according to at least one of the preceding claims, in each case performed for a plurality of instants, in particular for a multiplicity of instants, of a prescribed interval of time during the operation of the solar thermal power plant (1).

12. Method according to at least the preceding claim,
**characterized in that**
the interval of time is a prescribed period of operation of the solar thermal power plant (1), and/or the instants constitute a time series in the interval of time.

13. Method according to at least one of the preceding claims, used for automatic power regulation (71) of the solar thermal power plant (1),
- wherein the method according to at least one of the preceding claims is in each case implemented for a multiplicity of instants of a time series constituted by a prescribable operating period interval of this solar thermal power plant (1),
- wherein, each time one of the presently prescribed setpoints (70) of this solar thermal power plant (1) is outside of the respective present power range (80), this present setpoint (70) is adjusted automatically to the present power range (80), in particular by a setpoint setter of this solar thermal power plant (1), in particular is set to the respective relevant control range limit (91, 92),
- and the power of this solar thermal power plant (1) is regulated using the presently prescribed and, if necessary, adjusted setpoints (70).

14. Solar thermal power plant (1) having a primary heat source (10) that is not freely adjustable and an additional heat source (20),
**characterized by**
a data processing means (64), in particular a programmed computing unit (64) set up in such a manner that at least one of the methods defined in the preceding method claims can be implemented.

15. Solar thermal power plant (1) according to at least the preceding claim,
in which the data processing means (64) is a constituent part of a block control system (61) of the solar thermal power plant (1).

## Revendications

1. Procédé d'adaptation d'une valeur de consigne, notamment pour une régulation automatique de puissance dans une centrale (1) héliothermique à vapeur, comprenant une source (10) de chaleur primaire, qui ne peut pas être adaptée et une source (20) de chaleur supplémentaire,
**caractérisé en ce que**
- à au moins un instant donné à l'avance pendant un fonctionnement de la centrale (1) héliothermique à vapeur, on détermine une plage (80) instantanée de puissance de cette centrale (1) héliothermique à vapeur,
- dans lequel on délimite la plage (80) instantanée de puissance de cette centrale héliothermique à vapeur par une limite (91) inférieure de plage de régulation et par une limite (92) supérieure de plage de régulation et
- on détermine la plage (80) instantanée de puissance en utilisant une puissance instantanée de la source (81) (10) de chaleur primaire, ainsi qu'en utilisant une plage de puissance de la source (20) (82) (83) de chaleur supplémentaire,
- dans lequel, à la limite (91) inférieure de la plage de régulation, on prend en compte une réserve (84) inférieure de puissance, ayant au moins une composante de réserve pour une régulation de puissance et/ou pour une régulation de fréquence ou une régulation de fréquence primaire et/ou une régulation de fréquence secondaire,
- dans lequel, à la limite (92) supérieure de la plage de régulation, on prend en compte une réserve (85) supérieure de puissance, ayant au moins une composante de réserve pour la régulation de puissance et/ou la régulation de fréquence ou la régulation de fréquence primaire et/ou la régulation de fréquence secondaire et,
- à l'adaptation de la valeur de consigne, on règle (71), dans la plage instantanée de puissance, une valeur (70) de consigne instantanée donnée à l'avance de la centrale (1) héliothermique à vapeur, si la valeur (70) de consigne instantanée donnée à l'avance est en dehors de la plage (80) instantanée de puissance.

2. Procédé suivant la revendication 1,
**caractérisé en ce qu'**
on fait aller la valeur (70) de consigne instantanée donnée à l'avance de l'installation (1) héliothermique à vapeur, si la valeur (70) de consigne instantanée donnée à l'avance est supérieure à la plage (80) instantanée de puissance, vers le bas jusqu'à au moins la limite (92) supérieure de la plage de régulation et/ou on fait aller la valeur (70) de consigne instantanée donnée à l'avance de cette centrale (1) héliothermique à vapeur, si la valeur (70) de consigne instantanée donnée à l'avance est inférieure à la plage (80) instantanée de puissance, vers le haut jusqu'à au moins la limite (91) inférieure de la plage de régulation.

3. Procédé suivant au moins l'une des revendications précédentes,
**caractérisé en ce qu'**
on fixe la plage instantanée de puissance provenant de la source (20) de chaleur supplémentaire, notamment d'un foyer (20) au gaz naturel, par une puissance minimum possible provenant de la source (20) (82) supplémentaire de chaleur, ainsi que par une puissance maximum possible provenant de la source (20) (83) supplémentaire de chaleur.

4. Procédé suivant l'une des revendications précédentes,
**caractérisé en ce qu'**
on détermine la plage (80) instantanée de puissance en utilisant la puissance instantanée provenant de la source (10) (81) primaire de chaleur, notamment de l'énergie (10) solaire additionnée de la puissance possible au minimum provenant de la source (20) (82) supplémentaire de chaleur, ainsi qu'en utilisant la puissance instantanée provenant de la source (10) (81) primaire de chaleur, notamment de l'énergie (10) solaire additionnée de la puissance possible au maximum provenant de la source (20) (83) supplémentaire de chaleur.

5. Procédé suivant l'une des revendications précédentes,
**caractérisé en ce qu'**
à la limite (91) inférieure de la plage de régulation, on prend en compte, une contribution (86) économique de la source (20) supplémentaire de chaleur pour obtenir un fonctionnement économique de la centrale (1) héliothermique, notamment pour obtenir un optimum économique.

6. Procédé suivant au moins l'une des revendications précédentes,
**caractérisé en ce qu'**
à la réserve (84) inférieure de puissance, on tient compte, en plus de la réserve pour la régulation de puissance et/ou la régulation de fréquence ou la régulation de fréquence primaire et/ou secondaire, d'une autre réserve pour un sous-foyer et/ou d'une autre réserve pour une décharge d'un accumulateur de vapeur et/ou pour un « damping ».

7. Procédé suivant au moins l'une des revendications précédentes,
**caractérisé en ce que**
à la réserve (85) supérieure de puissance, on tient compte, en plus de la réserve pour la régulation de puissance et/ou la régulation de fréquence ou la régulation primaire et/ou secondaire, d'une autre réserve pour un sur-foyer et/ou d'une autre réserve pour une charge d'un accumulateur de vapeur et/ou pour un « damping ».

8. Procédé suivant au moins l'une des revendications précédentes,
**caractérisé en ce qu'**
on détermine la limite (91) inférieure de la plage de régulation par la puissance instantanée provenant de la source (10) (81) primaire de chaleur, additionnée de la puissance possible au minimum provenant de la source (20) (82) supplémentaire de chaleur, additionnée d'une contribution (86) économique de la source (20) supplémentaire de chaleur pour obtenir un fonctionnement économique de la centrale (1) héliothermique, notamment pour obtenir un optimum économique, ainsi qu'additionnée de la réserve (84) inférieure de puissance et/ou **en ce que** l'on détermine la limite (92) supérieure de la plage de régulation par la puissance instantanée provenant de la source (10) (81) primaire de chaleur, additionnée de la puissance possible au maximum provenant de la combustion par un combustible (83) supplémentaire, ainsi que diminuée de la réserve (85) supérieure de puissance.

9. Procédé suivant au moins l'une des revendications précédentes,
**caractérisé en ce qu'**
on communique la plage (80) instantanée de puissance de la centrale (1) héliothermique à vapeur à un régleur de valeur de consigne de cette centrale (1) à vapeur, qui adapte (71) la valeur (70) de consigne donnée à l'avance instantanément de cette centrale (1) héliothermique à vapeur, si elle se trouve en dehors de la plage (81) instantanée de puissance.

10. Procédé suivant au moins l'une des revendications précédentes,
**caractérisé en ce que**
si la plage (80) instantanée de puissance, qui a été déterminée, de la centrale (1) héliothermique à vapeur devient inférieure à une plage minimum donnée à l'avance, on amène la valeur (70) de consigne donnée à l'avance instantanément à une valeur réelle et/ou on interrompt une influence de répartition de charge et/ou une influence de régulation de fréquence ou de régulation primaire et/ou secondaire.

11. Procédé suivant au moins l'une des revendications précédentes,
effectué respectivement à plusieurs instants, notamment à une pluralité d'instants, d'un intervalle de temps donné à l'avance pendant le fonctionnement de la centrale (1) héliothermique à vapeur.

12. Procédé suivant au moins l'une des revendications précédentes,
**caractérisé en ce que**
l'intervalle de temps est une durée de fonctionnement donnée à l'avance de la centrale (1) héliothermique à vapeur et/ou des instants d'un laps de temps dans l'intervalle de temps.

13. Procédé suivant au moins l'une des revendications précédentes,
utilisé pour la régulation (71) automatique de puissance de la centrale (1) héliothermique à vapeur,
- dans lequel, pour une pluralité d'instants d'un laps de temps dans un intervalle de durée de fonctionnement pouvant être donné à l'avance de cette centrale (1) héliothermique à vapeur, on effectue respectivement le procédé suivant l'une au moins des revendications précédentes,
- dans lequel, chaque fois que l'une des valeurs (70) de consigne donnée à l'avance présentement de cette centrale (1) héliothermique à vapeur se trouve en dehors de la plage (80) de puissance instantanée, on adapte cette valeur (70) de consigne instantanée automatiquement, notamment par un régleur de valeur de consigne de cette centrale (1) héliothermique à vapeur à la plage (80) de puissance instantanée en la réglant notamment à la limite (91, 92) de plage de réglage pertinente respectivement,
- et on régule la puissance de cette centrale héliothermique à vapeur en utilisant les valeurs (70) de consigne données à l'avance instantanément et adaptées le cas échéant.

14. Centrale (1) héliothermique à vapeur ayant une source (10) de chaleur primaire qui ne peut pas être adaptée librement et une source (20) de chaleur supplémentaire,
**caractérisée par**
un moyen (64) de traitement de données, notamment une unité (64) informatique programmée qui est conçue de manière à pouvoir effectuer au moins l'un des procédés définis dans les revendications de procédés précédentes.

15. Centrale (1) héliothermique à vapeur suivant au moins la revendication précédente,
dans laquelle le moyen (64) de traitement de données fait partie d'une commande (61) bloc de la centrale (1) héliothermique à vapeur.
